# EUROPEAN PATENT APPLICATION

(11) **EP 2 508 058 A1**
(43) Date of publication of application: **10.10.2012**
(21) Application number: 12160342.7
(22) Date of filing: 20.03.2012
(51) Int. Cl.: A01B 79/00, A01G 1/00

(54) **Method and system for closed loop material application to plants**

(30) Priority: 05.04.2011 US 201113080465
(71) Applicant: Deere & Company, Moline, IL 61265-8098 (US)
(72) Inventor: Dybro, Niels, Sherrard, IL Illinois 61281 (US); Gilmore, Brian J, Geneseo, IL Illinois 61254 (US); Mayfield, Robert L, Cedar Falls, IA Iowa 50613 (US)
(74) Representative: Holst, Sönke

(57) **Abstract**

A method (100) of controlling material applications to plants includes the steps of tracking (106,108) and modifying (112). The tracking steps include tracking at least one of a location, a type, an age, and a yield of at least some of the plants including a first plant. The modifying step (112) includes modifying a material application by a material application device. The material being directed to the first plant is dependent upon at least one of the location, the type, and the age, and the yield of the first plant.

## Description

The application of different materials to plants is well known and includes the delivery of pesticides, fungicides, insecticides, herbicides, as well as various nutrients including fertilizers and organic preparations. There is a high level of sensitivity relative to the overuse of agents in material on plants, and the cost of such applications are significant inputs into the operation of an agricultural operation, particularly the application of a perennial plant operation such as an orchard. The efficient use of nutrients and chemical applications to the trees in an orchard take into account several things, including the effects on the biology and chemistry of soil as well as the influence of weather upon the material applications.

One of the more common forms of material application, especially in conventional agriculture, is the use of mechanical sprayers. Sprayers typically include a tank, a pump, a boom, and a nozzle, which may be directionally controlled. Sprayers convert a material application, often containing a mixture of water or other liquid chemical carriers such as fertilizer and any other chemicals, into droplets, which can be rain-type drops or tiny, almost invisible mist-like particles. This conversion is accomplished by forcing the spray mixture through a spray nozzle under pressure. The size of the droplets can be altered through the use of different nozzle sizes, or by altering the pressure under which the material application is forced through the nozzle, or by a combination of both.

There are some technologies available that are utilized for better control of the material being sprayed through a sprayer. In some instances, controlling droplet size using ultralow volume or very low volume application rates of mixtures can be utilized to achieve adequate results by improved timing and dose transfer to the biological target. An understanding of the biology and the life cycle of the plant as well as any pests is an important factor in determining the type of application in the agricultural system.

Specialty crop producers utilizes geographic information systems (GIS) and global positioning systems (GPS) for grove planting and pest tracking. Variable rate technology of material is being adopted but it has been limited to controlled spraying when a tree or plant is detected. US Patent Nos. 7,184,859 and 7,103,451 discuss methods and systems for spatially variable rate application of agricultural chemicals based on remotely sensed vegetation data. Aerial imagery is used to measure the tree health and the data is processed and a prescription is generated. Undisclosed techniques are utilized to generate the prescription and there is no algorithm disclosed nor is there an input of yield data. While GPS is used to record the application of chemicals, there is no use of GPS data to tag the tree yield data. There is no connection between the yield and delivery chemical inputs by way of GPS location tracking.

US Patent No. 6,862,083 disclose a system and method for characterizing and mapping agricultural plants and foliage. This system uses a laser range finding system to identify trees and then activates a sprayer accordingly, taking into account the tree condition. The disclosed tree conditions are dead, fully grown, or juvenile. This disclosure does not record the location of the tree using GPS system, nor does it tie the tree yield to an amount of spray or chemical treatment.

US Patent No. 6,926,211 disclose a closed loop mosquito insecticide delivery system. This system uses GPS maps of known mosquito infested areas, such as stagnant ponds, to actuate the sprayer at the appropriate location. There is no measure of the efficacy of the spray treatment or any adjustment of the insecticide spray accordingly.

US Patent No. 6,549,851 disclose a real time plant nutrition prescription including the measure of plant tissue analysis to determine the prescription through a rule base. There is no use of yield, or GPS, to determine the amount of chemical treatment delivered to an individual tree.

What is needed in the art is a system and method to close the loop between yield and material applications delivered to individual plants.

The present invention provides a closed loop method in the control of a material application to a plant, particularly a tree in an orchard, using yield data of the plant. The invention in one form thereof is directed to a method of controlling material applications to plants. The method includes the steps of tracking and modifying. The tracking steps include tracking at least one of a location, a type, an age, and a yield of at least some of the plants including a first plant. The modifying step includes modifying a material application device. The material being directed to the first plant by the material application device is dependent upon at least the location, the type, the age, and/or the yield of the first plant.

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a schematical illustration of an embodiment of the apparatus carrying out the method of controlling a material application of the present invention; and
Fig. 2 is a schematical flowchart illustrating some aspects of the method utilized in Fig. 1.

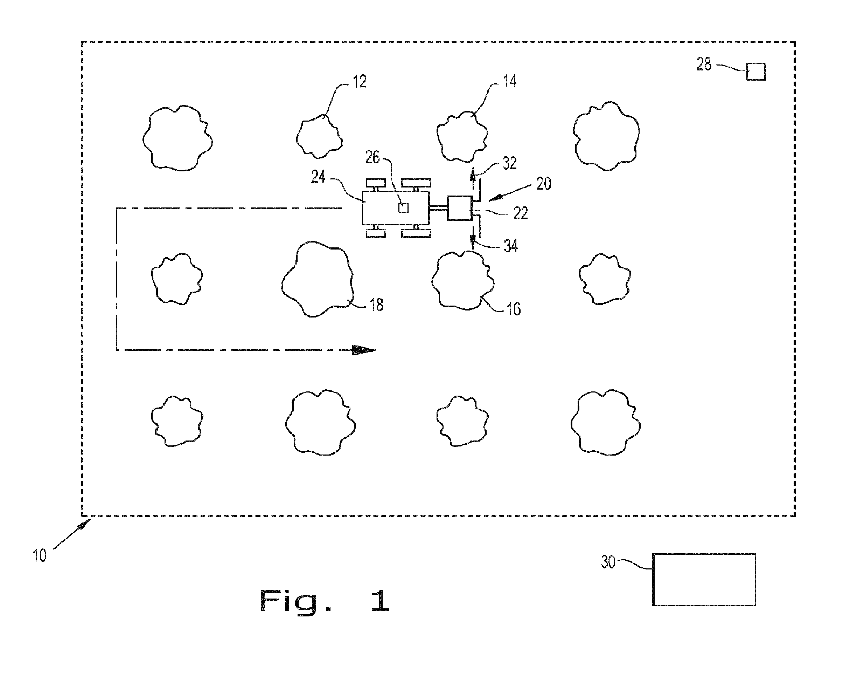

Corresponding reference characters indicate corresponding parts throughout the several views. The exemplification set out herein illustrates one embodiment of the invention and such exemplifications are not to be construed as limiting the scope of the invention in any manner. Referring now to the drawings, and more particularly to Fig. 1, there is illustrated a field 10 or orchard groove 10 including a tree 12, a tree 14, a tree 16, and a tree 18. The material application system 20 includes a material application device 22, a tractor 24, a global positioning system (GPS)/data system 26, a real time kinematic (RTK) base station 28, an analyzer 30, which includes a computer and memory devices in communication with GPS/data system 26 that prescribes a material application 32 and a material application 34 respectively to trees 14 and 16. The location of trees 12, 14, 16, and 18 are known by analyzer 30 and are utilized to populate a database that includes information relative to the location of the tree, the type of the tree, the age of the tree, and the yield of the tree. Additionally, historic information on previous material applications to each tree may be included in the database. Analyzer 30 gathers yield data at harvesting when a GPS/data system 26 is used to tag the yield of each tree for inclusion in the database.

As tractor 24 pulls material application device 22, GPS/data system 26 is either in communication with analyzer 30 or has a stored memory program that is transferred either by wireless communication or memory transfer or some other data transfer method having a prescribed material application for each tree. As tractor 26 pulls material application device 22, the offset between GPS/data system 26 and material application device 22, and particularly the nozzles and/or delivery mechanisms, is positioned to spray a particular prescription 32 or 34 in the form of a material application to individual trees. The offset between tractor 24 and, more particularly, GPS/data system 26 and applicator 22 is a known distance and is compensated for by GPS/data system 26. The path of tractor 24 may correspond to the path shown, in which case, the material application device 22 may pass both sides of the trees, and, in this case, a portion of a prescription may be provided to tree 16 in the form of material application 34 and then the rest of the prescription may be provided as tree 16 is approached from the opposite side.

Material application 32 and material application 34 is selected to be appropriate to each particular tree and may include an amount of a delivery of a solution and/or different solutions depending upon the tree age, location, type, and yield data.

Base station 28 is part of a real time kinematic system that interfaces with GPS/data system 26 to significantly improve the accurately of GPS/data system 26 to determine the positioning of tractor 24 and, hence, material application device 22. The RTK system is positioned at a known position in orchard 10 and provides an error correction signal, which is received by GPS/data system 26 to more accurately determine the position of material application device 22.

Selected trees within orchard 10 are the subject of a design of experiments technique in which nutrient and application of chemicals are applied to better test and understand the responsiveness of trees of different types and ages to material applications of these nutrients, biological and/or chemical applications. As a result, if trees 12 and 18 are part of the design of experiment trees then the various applications to trees 12 and 18 provide data that are correlated to yield that is then utilized to determine a material application 32 and 34 respectively to trees 14 and 16. Analyzer 30 utilizes the information from the design of experiments process to determine a correlation between the yield of tree 12 to develop the material application 32 applied to tree 14. The material application regime applied to trees 12 and 18, and other trees of the design of experiment process, takes into account many aspects including nutrient levels, chemical application amounts and timing, as well as correlating weather and soil types to provide an optimized material application 32 and 34 for trees 14 and 16. Trees 14 and 16, for the sake of clarity, are considered to not be a part of the design of experiment and are recipients of material applications correlated on trees in orchard 10 under the analysis of analyzer 30. The yield of each tree is logged relative to tagged bins or other methods to gather information relative to trees when the crops are harvested therefrom.

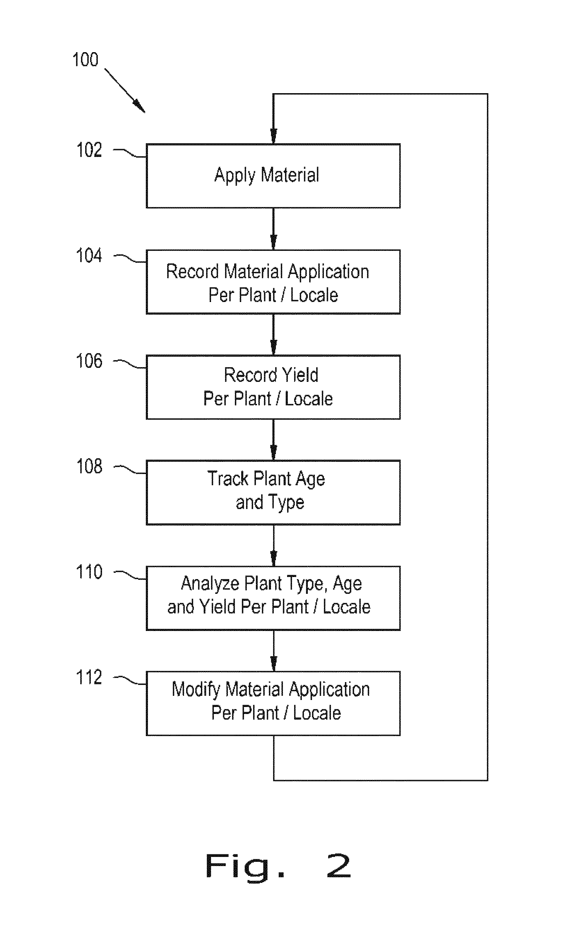

Now, additionally referring to Fig. 2, there are illustrated some steps in an embodiment of a method of the present invention in the form of a method 100 including a step 102 in which the material application is applied to a plant, which for the sake of illustration are trees 12, 14, 16, and 18. A record of the material application per plant or locale takes place at step 104. For the sake of understanding, the present invention is described as being applied to individual plants, although relative locales can also be a criteria for the determining of the location and the responsiveness of plants in the locale relative to the prescription based on the design of experiments methodology. At step 106, yield of the plant and, particularly in this case of tree 12, is undertaken. At step 108, analyser 30 tracks the tree age and the type of tree as a data gathering task as well as part of the design of experiments methodology. At step 110, analyzer 30 analyzes the plant type, age, and yield of a tree 12, which is part of the design of experiment study. This allows analyzer 30 to develop correlations between different cost inputs in the forms of nutrients, chemicals, and other preparations provided to tree 12 and other trees in the design of experiments process. This allows method 100 to modify material applications 32 and 34 of trees 14 and 16 based upon a correlation arrived at relative to trees 12 and 18. This method 100 allows a closing of the loop to measure the input effectiveness on a specialty crop yield by utilizing GPS/data system 26 to tag a tree yield data and subsequently allow analyzer 30 to correlate the yield delivery of chemical inputs. This allows the efficacy of the material applications to the trees to be optimized and, particularly, to adjust material application to minimize cost for efficient production of crops on individual trees.

Specialty crops, such as trees grown in orchard 10, are very dependent upon fungicide, pesticide, and herbicide spraying as well as the delivery of nutrients, for example in the form of fertilizer for the productive yield of trees in orchard 10. General chemical inputs are very expensive, as shown by a University of Florida citrus production cost summary (EDIS FE629), these costs per acre per application can cost in the neighborhood of $65 - $100 per spray and $55 for nitrogen. The prior art practice is to apply the same amount of nutrients and chemicals to all acres and, therefore, all trees. However, all trees are not the same, oftentimes some are smaller since they are replants and others are older and more mature trees. Specialty crops, such as trees in a grove, may have had a record of their yield by pump blocks. However, a problem in the prior art is that there is no way to measure an individual tree's yield in response to nutrients and chemical treatments. The present invention allows a measurement system that provides a way to control input costs by applying less to less productive trees and more to more highly productive trees. Even a small savings in input cost can provide large savings per acre, particularly for an entire orchard. The present invention provides the grove/orchard/vineyard manager a way to monitor a plant's yield in response to nutrient and chemical inputs.

Method 100 as it is utilized with material application system 20 provides for a sensing of the applications of material and correlates it to a yield produced per plant in orchard 10 so the information flowing to analyzer 30 includes the GPS location, the amount of chemical and nutrients applied to each tree by location, and a GPS location tagged to the yield of each tree. When the crop is collected at harvest time, each gathered amount is tagged by GPS location when it is picked up to thereby tie the producing tree to a particular bucket or series of buckets to calculate the production of each tree. The transfer of data between analyzer 30 and GPS/data system 26 can be transferred prior to entering orchard 10 and GPS/data system 26 may even be under real time control. On board memory of GPS/data system 26 allows for information to be passed to material application device 22 to thereby control material applications 32 and 34.

Method 100 is utilized by material application system 20 to track the material application by using the GPS/data system 26 associated with tractor 24 to record the location and the instrumented sprayer/applicator, described herein as a material application device 22, to record the amount of chemical applied. The recorded location and amount of chemical applied is stored in a memory, perhaps as a flash type memory or wireless transmissions are undertaken to the database contained in analyzer 30. During harvest, the GPS location of each tree is recorded, along with the yield from that tree. Additionally, as discussed above, if broader areas are of interest, the locale of a particular area may suffice, along with a yield for that locale. This data may be sent to the database by a wireless communication system or by a transfer of data in some other known manner.

Analyzer 30 may include an analysis engine that process the data through either a simple ratio of yield per input amount and cost or through a more sophisticated algorithm showing the yield response to specific chemicals and timing of those applications. In the preceding discussion, trees 12 and 18 were designated as being part of a design of experiments process; however, a control section of the grove can be set up separately in orchard 10 to conduct a design of experiments relative to various applications to the trees in that particular control group, thereby providing correlations that are utilized to determine the material applications applied to other trees in the grove.

## Claims

1. A method of controlling material applications to plants, the method including the steps of:
tracking at least one of a location, a type, an age and a yield of at least some of the plants including a first plant; and
modifying a material application from a material application device, said material application being directed to the first plant dependent upon at least one of said location, said type, said age and said yield of the first plant.

2. The method of claim 1, wherein the plants additionally include a second plant, said second plant being subjected to a design of experiment process to determine a correlation between said yield of said second plant and a material application regime to said second plant.

3. The method of claim 2, wherein said modifying step includes modifying said material application to said first plant dependent upon said correlation.

4. The method of claim 3, wherein said modifying step additionally includes modifying said material application to said first plant dependent upon said age of said first plant

5. The method of claim 1, wherein the plants additionally include a second plant adjacent to said first plant, said first plant having a first yield and a first age, said second plant having a second yield and a second age, said first yield being different from said second yield, said first age being different than said second age, said modifying step including applying at least one of a different rate of the material and a different composition of the material to said first plant than said second plant dependent upon said first yield, said second yield, said first age and said second age.

6. The method of claim 5, wherein said modifying step including applying said different rate of the material to said first plant than said second plant dependent upon said first yield, said second yield, said first age and said second age.

7. The method of claim 5, wherein said modifying step applies said different material application to said first plant than said second plant dependent upon said first yield and said second yield.

8. The method of claim 5, wherein said modifying step applies said different material application to said first plant than said second plant dependent upon said first age and said second age.

9. The method of claim 1, further comprising the step of analyzing said yield of said first plant and said yield of a second plant of the plants, said analyzing step determining said material application to apply to said first plant and said second plant in said modifying step.

10. The method of claim 9, further comprising the step of recording data representative of said yield of said first plant and said yield of said second plant, said data being analyzed by a computer during said analyzing step.

11. The method of claim 10, further comprising the step of recording the material application directed toward said first plant and said second plant by said material application device.

12. The method of claim 1, wherein the plants are perennial plants.

13. A material application system for application of material to plants, comprising:
a material application device having a variable material delivery mechanism;
a Global Positioning System (GPS) associated with said material application device, said GPS producing a signal representative of a location of said material application device;
a computer;
a memory device in communication with said computer, said memory device containing data relating to at least one of a location, a type, an age and a yield of at least some of the plants including a first plant, said material application device using said data along with said signal from said GPS to modify a material application being directed to the first plant.

14. The material application system of claim 13, wherein the plants additionally include a second plant, said computer being configured to determine a correlation between said yield of said second plant and a material application regime applied to said second plant, said second plant having been subjected to a design of experiments process to produce information that results from said material application regime, said information used by said computer to determine said correlation, said correlation being applied to said data to modify said material application device to alter said material application to said first plant.

15. The material application system of claim 14, wherein said correlation is applied to just said age of said first plant to modify said material application device to alter said material application to said first plant and/or wherein the plants additionally include a second plant adjacent to said first plant, said first plant having a first yield and a first age, said second plant having a second yield and a second age, said first yield being different from said second yield, said first age being different than said second age, said material application device being altered to apply at least one of a different rate of the material and a different composition of the material to said first plant than said second plant dependent upon said first yield, said second yield, said first age and said second age, wherein preferably said material application device is altered to apply a different rate of the material to said first plant than said second plant dependent upon said first yield, said second yield, said first age and said second age and/or said material application device is altered to apply a different material application to said first plant than said second plant dependent upon said first yield and said second yield and/or wherein said material application device is altered to apply at least one of a different material application to said first plant than said second plant dependent upon said first age and said second age and/or wherein the plants additionally include a second plant, said computer being configured to analyze said yield of said first plant and said yield of said second plant, said material application device altering said material application to said first plant dependent upon a correlation of a material application to said second plant and said yield of said second plant.
